Europäisches Patentamt

(19) European Patent Office

Office européen des brevets

(11) Publication number : **0 486 227 A1**

(12) **EUROPEAN PATENT APPLICATION**

(21) Application number : **91310345.3**

(22) Date of filing : **08.11.91**

(51) Int. Cl.⁵ : **F16F 13/00, F16F 15/02, F16F 9/10**

(30) Priority : **13.11.90 US 611795**

(43) Date of publication of application :
**20.05.92 Bulletin 92/21**

(84) Designated Contracting States :
**CH ES FR GB IT LI SE**

(71) Applicant : **GENERAL ELECTRIC COMPANY**
**1 River Road**
**Schenectady, NY 12345 (US)**

(72) Inventor : **Seymour, John Robert**
**304 Pawtucket Street**
**Lowell, Massachusetts 01854 (US)**
Inventor : **Wellner, Kenneth Victor**
**20 Battles Road**
**Westminster, Massachusetts 01473 (US)**
Inventor : **Luz, James John**
**59 James Street**
**Tewksbury, Massachusetts 01876 (US)**
Inventor : **Gardner, Craig Martin**
**44 Centre Street**
**Danvers, Massachusetts 01923 (US)**

(74) Representative : **Pratt, Richard Wilson et al**
**London Patent Operation G.E. TECHNICAL**
**SERVICES CO. INC. Burdett House 15/16**
**Buckingham Street**
**London WC2N 6DU (GB)**

(54) **Vibration damper assembly.**

(57)   A vibration damper assembly (10) is provided which includes a first attachment element or bracket (12) for securing the damping mechanism to a structure, the vibrations of which are to be damped. A visco-elastic spacer block (20) or member is secured to the element or bracket at one end, and to a cylinder (22) of a piston/cylinder assembly at its other end. A piston (24) is slidably received in the cylinder with a predetermined clearance (66) between the peripheral surface of the piston and the cylinder wall (30). A piston rod (40) extending from the piston and the opposite end of the cylinder is received within a housing (44) of a viscous damping device (42), the piston rod having a plurality of discs (52) mounted thereon in predetermined, spaced relationship. An interior wall of the housing is also formed with a plurality of disc-like surfaces (54) projecting toward the radial center of the housing, with aligned apertures therein to accommodate the piston rod. The other or remote end of the viscous damper housing is secured to a second attachment element or bracket (14) by which the damper is secured to a stationary supporting (relative to the vibrating structure) surface or substrate.

Fig. 1

## BACKGROUND AND SUMMARY OF THE INVENTION

It is a well known practice in certain engineering design developments to devote substantial efforts toward eliminating or at least minimizing structural vibration, or noise as it is commonly called, in mechanical components. Such developments range from rotating machine components such as those in gas turbine engines to sensitive electronic components. A solution to such vibration problems is often achieved with the use of carefully placed discrete vibration dampers.

A common class of discrete vibration dampers serve to dissipate vibrational energy by transforming kinetic vibration energy into thermal energy, which in turn is harmlessly dissipated into the surroundings. Some such devices reduce the transmission of noise by utilizing a shearing action of a highly viscous fluid. Viable fluid based damper designs employ pressure differentials to force the damper fluid through an area where the viscous shearing takes place (such as through an orifice). These designs are effective at damping relatively large amplitudes of vibration, but are less effective and oftentimes wholly ineffective with extremely low vibration levels such as those associated with stringent vibration specifications. In the event of small vibration amplitudes, such existing designs are unable to force the damping fluid through the internal energy dissipation paths because they are unable to produce the required internal pressure differentials. Discrete dampers of this type often require several visco-elastic seals to contain the fluid within the damper fixture. Consequently, in the event of extremely small vibrations, the visco-elastic seals yield before sufficient internal pressures can be developed to initiate viscous shearing action.

There are other requirements that must be addressed in the selection of a suitable damping techniques. One of these is that the damper be capable of successful operation in the event that the two structures or components connected by the damper have long term relative creep between them. This essentially requires the damper to be capable of repositioning its inner dampening mechanism during long term (months and possibly years) fluctuations in the relative distance between the two components or structures.

A second requirement is that the damper fixture be tunable so that it may be adjusted to accommodate different vibration specifications in terms of damping levels and frequency content. More precisely, it is desirable that the damper be capable of dissipating low frequency vibrational energy, while not creating a "short" for high frequency energy between the two structures.

A third requirement is that the damper be capable of maintaining its structural integrity during a dynamic shock event, for example of the type experienced by naval shipboard equipment. Such an event could invoke excessive impulse forces on the damper. Existing damper designs in addition to their inability to satisfactorily dissipate low level vibration, are not likely to survive large impulsive forces characteristic of dynamic shock.

The present invention provides a damper assembly that in capable of meeting all of the above requirements. Specifically, the damper assembly of this invention is a tunable design, capable of dissipating extremely low level vibration while also having the ability to reposition itself in the event of either long term creep or dynamic shock.

In an exemplary embodiment of the invention, the damper assembly of this invention comprises three components: (1) a tuned visco-elastic spacer; (2) a sealed piston/cylinder assembly; and (3) a viscous damping mechanism.

More specifically, the damping mechanism according to this invention includes a first attachment element or bracket for securing the damping mechanism to a structure, the vibrations of which are to be damped. A visco-elastic spacer block or member is secured to the element or bracket at one end, and to a cylinder of a piston/cylinder assembly at its other end. A piston is slidably received in the cylinder with a predetermined clearance between the peripheral surface of the piston and the cylinder wall. A fluid line extends from the cylinder to connect cylinder chambers above and below the piston. This fluid line is also provided with a check valve for a purpose described further herein. A piston rod extending from the piston and the opposite end of the cylinder is received within a housing of a viscous damping device, the piston rod having a plurality of discs mounted thereon in predetermined, spaced relationship. An interior wall of the housing is also formed with a plurality of disc-like surfaces projecting toward the radial center of the housing, with aligned apertures therein to accommodate the piston rod.

The other or remote end of the viscous damper housing is secured to a second attachment element or bracket by which the damper is secured to a stationary supporting (relative to the vibrating structure) surfact or substrate.

The arrangement of piston rod discs, and housing discs, is such that the respective groups of leaves are interdigitated, with a close axial spacing between adjacent piston and housing discs. This is a known viscous damper design, sometimes referred to as a "Christmas tree" damper, and it is well understood that relative axial movement between the groups of discs causes the viscous fluid to be compressed or "squished" between the discs, resulting in a viscous shearing of the fluid, and hence energy dissipation through generation of heat.

The above described elements or components of the damper are thus connected in series and dissipate energy as described below. For the occurrence of long term creep and extremely low frequency motion, the piston and cylinder move relative to each other with minimal force transmitted to the lower portions. of the structure, i.e., to the viscous damping mechanism. Thus, equilibrium is substantially maintained between the fluid in the upper and lower chambers of the piston/cylinder assembly because of the slow relative motion of the cylinder relative to the piston permitted by reason of the predetermined clearance between the piston and the cylinder side wall. Springs located above and below the damping mechanism also tend to bring the damper back to its original equilibrium position to insure consistent damping performance.

For mid and high frequency vibration, the piston/cylinder side wall clearance would be sufficiently small to restrict the increased flow of velocity brought about by the higher frequency vibration. Thus, alternating high and low pressures will be developed in the upper and lower chambers of the cylinder, thereby transferring force between the piston and the surrounding cylinder, so that they act as a substantially rigid unit. This force transmission will ultimately result in axial movement of the piston rod and consequent fluid shearing action in the viscous damping mechanism below the piston/cylinder assembly to thereby dissipate the kinetic vibration energy.

The utilization of a tunable visco-elastic spacer eliminates the possibility of a high frequency short within the system. Specifically, the spacer may be selected tuned so that the damper's natural frequency would complement the frequency requirements of its application.

The dynamic shock requirements of the damper are addressed by incorporating the relief valve in the fluid line arrangement into the cylinder walls on either side of the piston. For a severe shock event, large pressures would develop in the piston chamber and the valve and line located in the side of the cylinder would be adjusted to open at a certain predetermined pressure, thus allowing rapid fluid flow between the upper and lower chambers of the piston/cylinder assembly. This would eliminate any force build-up which could otherwise adversely effect the damping mechanism.

In accordance with one exemplary embodiment of the invention, therefore, there is provided a tunable vibration damper assembly comprising (a) a visco-elastic spacer; (b) a piston and cylinder assembly including a piston rod attached at one end to the piston and having a free end extending out of one end of the cylinder, wherein the visco-elastic spacer is attached to the other end of said cylinder; and (c) a viscous damping component operatively attached to the free end of the piston rod.

In another aspect, the invention provides a vibration damper assembly adapted to dissipate kinetic energy from relatively low and relatively high amplitude vibrations comprising: an elastic spacer connected at one end to a structure whose vibrations are to be damped, and at the other end to a cylinder of a piston/cylinder assembly; the cylinder enclosing a piston therein defining variable volume chambers in said cylinder above and below said piston; a piston rod extending from said piston, through said cylinder and into a viscous damper housing, wherein said piston rod and an interior surface of said viscous damper housing are provided with interdigitated damping means.

In still another aspect, the invention provides a viscous damper assembly comprising first means for fine tuning vibrational damping characteristics of the assembly; second means for damping low amplitude vibrations; and third means for damping high amplitude vibrations; wherein the second means includes first and second elements, the first means connected to one of the elements and the third means connected to the other of the elements.

Other objects and advantages of the subject invention will become apparent from the detailed description which follows.

## BRIEF DESCRIPTION OF THE DRAWINGS

FIGURE 1 is a diagrammatic side view of a tunable damper assembly in accordance with this invention;
FIGURE 2 is a system dynamics diagram representing the damper assembly response at low frequency vibration; and
FIGURE 2b is a system dynamics diagram representing the damper assembly response at mid to high frequency vibration.

## DETAILED DESCRIPTION OF THE DRAWINGS

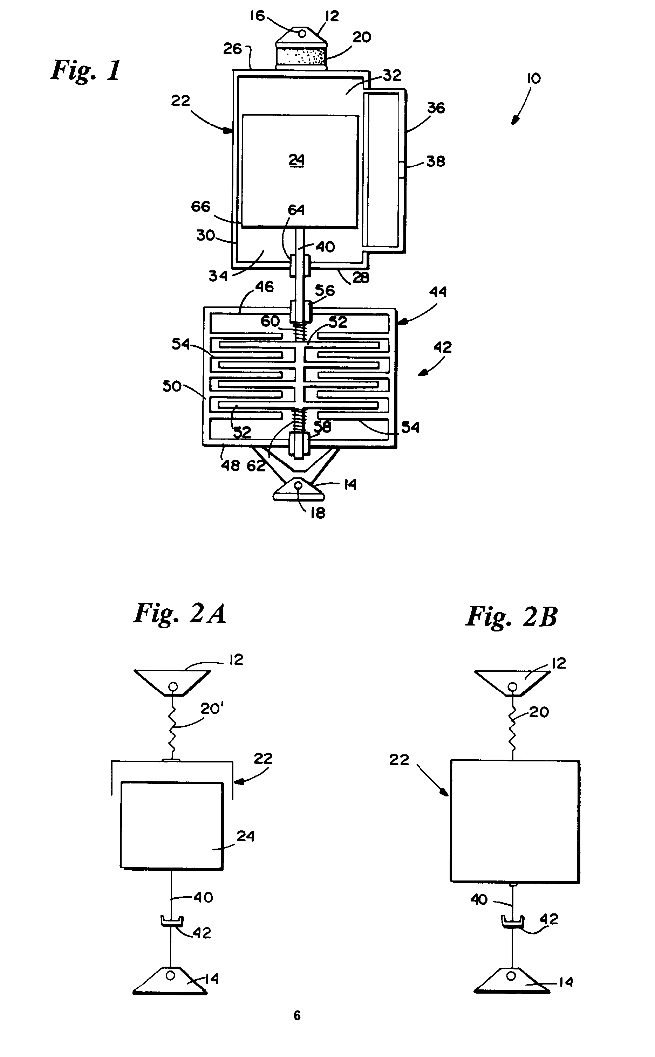

Referring to Figure 1, the tunable vibration damper assembly 10 lies intermediate two attachment brackets or mechanisms 12 and 14. The upper bracket or attachment point 12 would typically be secured to a first structure or component whose vibrations are to be damped. The lower attachment bracket 14 is designed to be secured to a second structure, e.g., a supporting substrate or surface (not shown) which would normally be stationary relative to the first structure. In either case, the attachments may be of a pivotal nature as indicated by reference numerals 16 and 18. This arrangement would accommodate angular movement of either or both component structures but, of course, only the linear component of such motion will be damped by the vibration damper assembly.

A tunable visco-elastic spacer member 20 is connected to the upper attachment bracket 12 by any suitable means. The spacer member itself may be constructed of a visco-elastic rubber or other suitable material, the geometry and dimensions of which will depend upon the specific application for the damper assembly. In other words, since the visco-elastic spacer 20 behaves like a spring, its characteristic "spring rate" can be altered as desired as a function of size, shape and composition. The visco-elastic spacer 20 is secured at its lower end to a cylinder 22 which encloses a piston 24.

The cylinder 22 includes a pair of end walls 26, 28 and a peripheral side wall 30, and is filled with a viscous fluid. The piston 24 and cylinder 22 are movable relative to one another such that variable volume chambers 32 and 34 are established, respectively, above and below the piston 24. A fluid conduit 36 extending from the side wall 22, connecting the chambers 32 and 34. A check valve 38 is positioned in the conduit 36 and is calibrated to open at a predetermined fluid pressure level, as described in further detail below.

A piston rod 40 extends from the lower end of the piston and projects beyond the lower wall of the cylinder and into a damping mechanism 42 which includes an outer housing 44 including top and bottom walls 46, 48 and a side wall 50. The damping mechanism is n "Christmas tree" type damper device which includes a plurality of disks 52 rigidly attached to the piston rod 40 in vertically spaced relationship. At the same time, the housing 44 is provided with a plurality of disks 54 which are interdigitated with the disks 52, so that a small clearance exists between adjacent ones of the disks 52 and 54. The housing 44 is substantially filled with a high viscosity fluid such as gear oil or other suitable fluid, e.g., a silicon fluid. As described above, relative axial movement between the discs 52 and 54 will result in viscous shearing of the fluid with consequent energy dissipation in a manner well understood by those skilled in the art.

The piston rod 40 is sealed relative to the housing 44 by means of seals 56 and 58. Repositioning springs 60, 62 are located between the seals 56, 58, respectively, and the nearest disks 52. These springs tend to maintain the disks 52 in a stable and centered relationship with respect to the disks 54. A third seal 64 prevents any leakage from the cylinder 22 at that point where the piston rod 40 projects from the cylinder.

With reference also now to Figures 2A and 2B, the operation of the vibration damper assembly 10 will be described under various operating conditions. In order to accommodate long term creep or extremely low frequency vibrations, the cylinder 22 will move relative to the piston 24 which, in turn, will remain substantially stationary. In other words, and as indicated in the dynamic diagram of Figure 2A, the visco-elastic spacer 20′ and the cylinder 22 are, in effect, decoupled from the piston 24′ and the damper 42′. This is because for long term creep or low frequency vibrations, the clearance 66 between the piston 24 and the side wall 30 of the cylinder 22 is sufficient to permit fluid to flow between the chambers 32 and 34 on either side of the piston. At the same time, the springs 60 and 62 also tend to maintain piston 24 (via piston rod 40) in a state of equilibrium so that the vibration damper assembly 10 will tend to remain in, or be restored to, its original position.

Under higher vibration amplitude conditions, the piston/cylinder side wall clearance 66 is insufficient to accommodate the increased flow generated by the increased vibration amplitude. As a result, alternating high and low pressures will be developed in the upper and lower chambers 32, 34 thereby causing the piston and cylinder assembly to move as a unit relative to the viscous damper housing 32. With reference to Figure 2B, the spacer 20′, piston 24′ and spacer 20′, and piston rod 40′ are, in effect, joined as a rigid unit. As a result, the discs 52 will move axially relative to the discs 54, and the viscous fluid within the housing 44 will be sheared, thereby generating heat and dissipating the higher vibration energy.

In the event of a dynamic shock, large pressures will be developed in the upper chamber 32 and, at a certain predetermined pressure level, the relief valve 38 will open to permit rapid flow of fluid between the upper and lower chambers 32, 34, respectively. This arrangement serves to eliminate any significant force buildup which could otherwise adversely effect the damping mechanism 42.

Finally, any resonance within the system itself can be controlled to some extent by the tuned visco-elastic spacer 20. Specifically, by a judicious selection of the spacer element 20, including its geometry, dimensions, resonance and/or composition, resonance within the system can be fine tuned in order to meet specific given requirements. In other words, the frequency can be tuned to an amplitude within the required specifications set for the damper assembly 10.

The above described vibration damper assembly has specific applicability on naval main propulsion and turbine generator sets, but it is to be understood that the assembly has general applicability to any structure or component where stringent vibration specifications must be met.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the invention.

## Claims

1. A vibration damper assembly comprising:
   (a) a visco-elastic spacer;
   (b) a piston and cylinder assembly including a cylinder, one end of which is attached to said visco-elastic spacer; a piston; and a piston rod attached at one end to the piston, said piston rod having a free end extending out of the other end of the cylinder; and
   (c) a viscous damping device operatively attached to the free end of the piston rod.

2. The assembly of claim 1 wherein said piston and cylinder assembly is provided with a relief line connecting opposite end portions of the cylinder on either side of the piston.

3. The assembly of claim 1 wherein said relief line is provided with a pressure actuated relief valve.

4. The assembly of claim 1 wherein sufficient clearance in provided between the piston and cylinder to permit fluid to pass therebetween under predetermined low amplitude vibration conditions.

5. The assembly according to claim 1 wherein the viscous damping component includes a housing including a first plurality of vertically spaced annular disks, each of which has a central aperture therein; and a second plurality of disks interdigitated with said first plurality of disks, said second plurality of disks fixedly attached to said piston rod.

6. The assembly according to claim 5 wherein said piston rod extends through said housing and through said central apertures in said first plurality of disks.

7. The assembly according to claim 6 wherein said piston rod extends through opposite end walls of said housing, and further wherein seals are provided between said piston rod and said opposite end walls.

8. The assembly according to claim 7 wherein biasing means are located between said seals and adjacent ones of said first plurality of discs.

9. The assembly according to claim 1 wherein a first mounting element is secured to said visco-elastic spacer and a second mounting element is secured to said housing.

10. A vibration damper assembly adapted to dissipate kinetic energy from relatively low and relatively high amplitude vibrations comprising: an elastic spacer connected at one end to a structure whose vibrations are to be damped, and at the other end to a cylinder of a piston/cylinder assembly; the cylinder enclosing a piston therein defining variable volume chambers in said cylinder above and below said piston; a piston rod extending from said piston, through said cylinder and into a viscous damper housing, wherein said piston rod and an interior surface of said viscous damper housing are provided with interdigitated damping means.

*Fig. 1*

*Fig. 2A*

*Fig. 2B*

| | European Patent Office | EUROPEAN SEARCH REPORT | Application Number |
|---|---|---|---|

EP 91 31 0345

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-B-1 286 821 (DEUTSCHE BUNDESBAHN)<br>* column 2, line 36 - column 3, line 14; figure * | 1,2,10 | F16F13/00<br>F16F15/02<br>F16F9/10 |
| A | FR-A-1 164 033 (RENAULT)<br>* the whole document * | 1,4,11 | |
| A | DE-A-3 913 819 (DAIMLER-BENZ)<br>* figures 1-4 * | 1,10 | |
| A | FR-A-2 495 718 (VOLKSWAGEN)<br>* page 5, line 20 - page 6, line 12; figures 1,5 * | 1,10 | |
| A | GB-A-1 445 373 (ARFINA)<br>* page 3, line 78 - line 94; figures 1,2 * | 1,5,10 | |
| A | DE-C-661 297 (FICHTEL & SACHS)<br>* page 1, line 54 - line 64; figure 1 * | 2 | |
| A | DE-B-1 028 394 (WESTINGHOUSE) | | TECHNICAL FIELDS SEARCHED (Int. Cl.5 ) |
| A | GB-A-2 112 902 (BOSCH) | | F16F<br>B63H |

The present search report has been drawn up for all claims

| Place of search | Date of completion of the search | Examiner |
|---|---|---|
| THE HAGUE | 29 JANUARY 1992 | TORSIUS A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document